# EUROPEAN PATENT SPECIFICATION

(11) **EP 0 888 023 B1**
(45) Date of publication and mention of the grant of the patent: **31.08.2005**
(21) Application number: 98305058.4
(22) Date of filing: 26.06.1998
(51) Int. Cl.: H04Q 7/36, H04Q 7/38

(54) **Method for assigning speech channel in mobile communication system and system therefor**
Verfahren zum Zuteilen eines Sprachkanals in einem mobilen Kommunikationssystem und System dafür
Méthode d'allocation d'un canal de parole dans un réseau de communication mobile et systéme correspondant

(30) Priority: 27.06.1997 JP 17193997
(43) Date of publication of application: 30.12.1998
(73) Proprietor: NEC CORPORATION, Tokyo (JP)
(72) Inventor: Imamura, Tomoyasu, Minato-ku, Tokyo (JP)
(74) Representative: W.P. Thompson & Co.

(56) References cited:
- US-A- 5 471 671
- US-A- 5 497 505

## Description

The present invention relates to a method and a system for assigning a speech channel used in communicating between a radio base station and a mobile radio station. A mobile communication system will be described below, by way of example, in illustration of the invention, in which a plurality of radio base stations has a plurality of speech channels (hereinafter simply referred to as "channel") in common, the assignment of the channel being controlled in an automonous distribution manner for each radio base station.

In a previously proposed method of assigning a channel in a mobile communication system, a channel which is expected to have little possibility of causing interference in the radio environment of the particular place is assigned on the basis of past experience, in an autonomously distributed fashion, as described, for example, the specification of Japanese Unexamined Patent Publication No. Heisei 1-80135 - published 27 March 1989 (Japanese Patent Application No. Showa 62-237876).

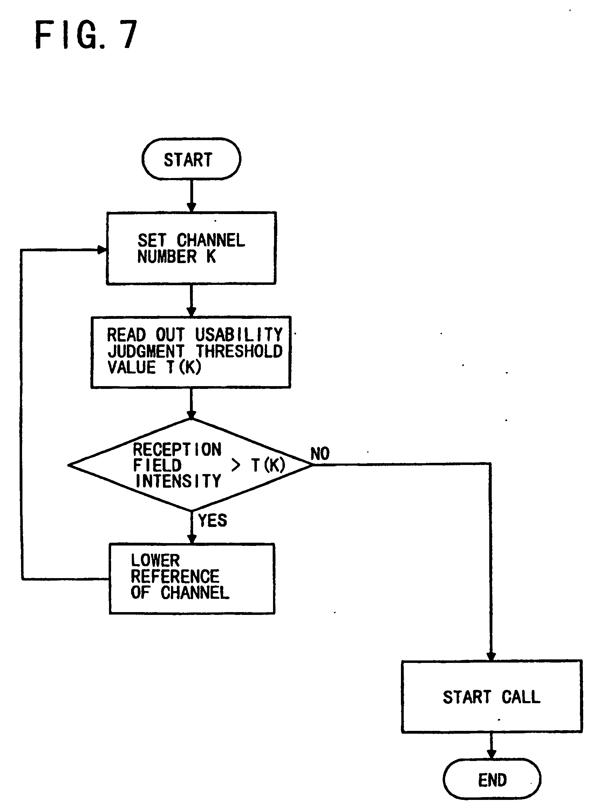

Reference will now be made to Fig. 7 of the accompanying drawings which is a flowsheet for use in describing the previously proposed method of speech channel assignment. In considering Fig. 7 it will be understood that a radio base station has a reference for determining the sequential order for the assignment of a channel. When it is necessary to communicate with a mobile radio station, the radio base station reads out a channel number K having the highest reference, compares an instantaneously received field intensity (which can be an interference wave) in the selected channel with a usability judgement threshold value T(K) to make a judgement upon whether the selected channel can be used or not. When a judgement is made that the selected channel cannot be used, the channel in question is recognized as a channel which easily causes interference and a process is carried out for lowering the preference of the channel. Then, a channel having the second highest preference is selected, for example, as a candidate channel upon which a judgement is made whether the candidate channel can be used or not. When a judgement is made that the selected channel can be used, a call is established through the selected channel.

The foregoing previously proposed channel assignment method has drawbacks in that, since the mobile communication system is used over a certain distance between the radio base station and the mobile radio station, even with an assigned channel which has a high preference on the side of the radio base station, and which has been judged to have no interference in view of usability judgement threshold value, it has been found that interference can be caused in the same channel on the mobile radio station. On the other hand, since the interference recorded on the radio base station side is only reflected in determination of the preference of the channel, the spatial re-use of the channel is not possible. Even when interference is easily caused on the mobile radio station, such a channel which easily causes the interference can be assigned again.

US-A-5471671 discloses a multiple channel communication system, whereby, before a call initiation routine begins, a mobile station locks to a base station and learns the Preferred Channel List (PCL) of that base station, which is downloaded into a memory of the mobile station. Thus, the mobile station is locked on to a base station and knows the PCL of the base station before call initiation.

When the call initiation routine begins, the PCL of the selected base station is examined to determine if the next (e.g., first) channel in the PCL is available. The quality of an available channel is measured to determine if the channel quality is above a threshold Th. The next channel in the PCL is selected if the channel quality is not above the threshold Th. However, if the channel quality is above the threshold, a connection request is sent to the base station via the channel. If a positive reply is not received from the base station within a predetermined time period Ti, the next available channel in the PCL is selected. However, if a positive reply is received from the base station within the predetermined time period Ti, the channel quality of the allocated channel is measured to determine if the channel quality is good. If the channel quality is good, a communication connection (i.e., radio link) is setup between the mobile station and the base station using the channel.

A drawback with such a system is that the channel quality is measured twice by the mobile terminal, thereby delaying the communication connection process.

A feature of a method and system for assigning a channel to be described below by way of example in illustration of the present invention is that spatial re-use of the channel is made possible by assigning a channel having a low possibility of causing interference, even in a mobile radio station, and preferably a channel is used having a low possibility of causing interference in both the radio base station and the mobile radio station.

According to an aspect of the present invention, there is provided a method for assigning a speech channel of a mobile communication system, in which each of a plurality of radio base stations having a plurality of channels in common assigns a speech channel to be used in an autonomous distributing manner, characterized in that it comprises:
a step executed by any of said radio base stations of setting a preference for assigning a speech channel;
a step executed by the radio base station of calculating the difference between a field intensity of the assigned speech channel and a threshold value for the field intensity and modifying the preference of the speech channel by an amount corresponding to the difference.
a step executed by the radio base station of issuing a notification of the speech channel to one of said mobile radio stations which tries to establish a call connection;
a step executed by the mobile radio station of calculating the difference between a field intensity of the speech channel conveyed in the notification from the radio base station and a threshold value for the field intensity and issuing a notification of the difference to the radio base station;
a step executed by the radio base station of modifying, based on the difference conveyed in the notification from the mobile radio station, the preference of the speech channel by an amount corresponding to the difference; and
a step executed by the radio base station of assigning a new speech channel based on the modified preference.

According to a further aspect of the present invention, there is provided a mobile communication system which includes a plurality of radio base stations which have a plurality of speech channels in common and to which a speech channel to be used is individually assigned in an autonomous distributing manner and a plurality of mobile radio stations adapted for communication with any of said radio base stations using the speech channel, characterized in that
each of said mobile radio stations includes difference calculation means for calculating the difference between a field intensity of the speech channel conveyed in a notification received from any of said radio base stations and a threshold value for the field intensity and notification means for notifying the radio base station of the difference, and that
each of said radio base stations includes preference setting means for setting a preference for assigning a speech channel, difference calculation means for calculating the difference between a field intensity of the assigned speech channel and a threshold value for the field intensity, preference modification means for modifying, based on the calculated difference and the difference conveyed in the notification received from any of said mobile radio stations, the preference of the speech channel by an amount corresponding to the differences, and speech channel assignment means for assigning a new speech channel based on the modified preference.

The following description and drawings, by means of an example, the invention which is characterised in the appended claims, whose terms determine the extent of the protection conferred hereby.

In the drawings:-
Fig. 1 is a schematic diagram showing the arrangement of a mobile communication system employing a channel assignment method,
Fig. 2 is a graphical illustration for use in explaining an interference model of a channel used in the system of Fig. 1,
Fig. 3 is a flow sheet for use in explaining one example of a channel assignment method,
Fig. 4 is a diagrammatic illustration for use in describing the exchange of a signal between the mobile radio station and the radio base station shown in Fig. 1,
Fig. 5A is a block schematic diagram for use in describing the arrangement of the radio base station shown in Fig. 1,
Fig. 5B is a block schematic diagram for use in describing the arrangement of the mobile radio station shown in Fig. 1, and
Fig. 6 is a graph for use in illustrating a difference/preference conversion table stored in the memory of the station shown in Fig. 5A.

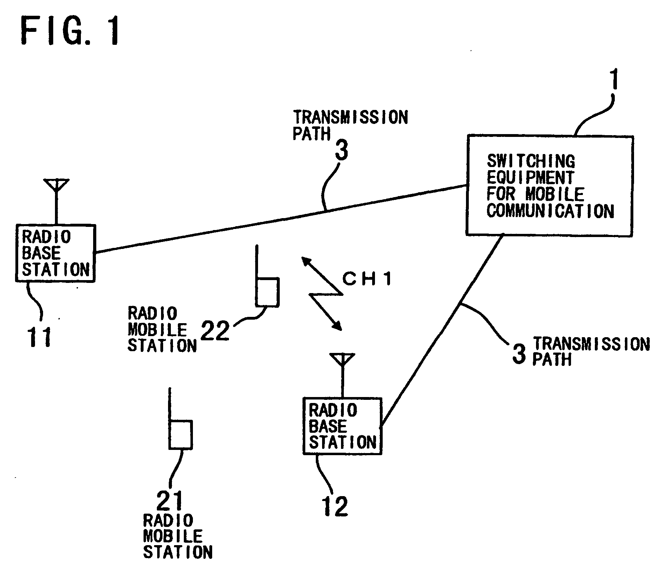

The particular embodiment of a mobile communication system shown in Fig. 1 includes switching equipment 1 for effecting the mobile communication, radio base stations 11 and 12, and mobile radio stations 21 and 22. The mobile radio station 21 establishes a radio connection for a call with the radio base station 11, and the mobile radio station 22 establishes a radio connection for a call with the radio base station 12. The mobile radio stations 21 and 22 have a plurality of channels in common. The radio base stations 11 and 12 have channels available as a common resource. The radio base stations 11 and 12 are connected to the switching equipment 1 for mobile communication via a transmission path 3.

Next, the operation of the system will be described.

In the arrangement of Fig. 1, the mobile radio station 22 and the radio base station 12 are currently in communication via a channel CH1. It is assumed that the mobile radio station 21 now wishes to start a communication with the radio base station 11, and that the radio base station 11 has the ability to choose the channel and to choose the channel with the highest preference as the channel to be used. The channel of the highest preference in this instance is the channel CH1.

Currently, the channel CH1 is occupied for communication between the mobile radio station 22 and the radio base station 12. However, since the mobile radio station 22 is far distant from the radio base station 11, and since the reception level of the channel CH1 between the mobile radio station 22 and the radio base station 11 is lower than a usability judgement threshold value, the channel CH1 is judged in the radio base station 11 to be more useful for communication and the channel CH1 is noticed or observed to be the channel to be used for communication with the mobile radio station 21.

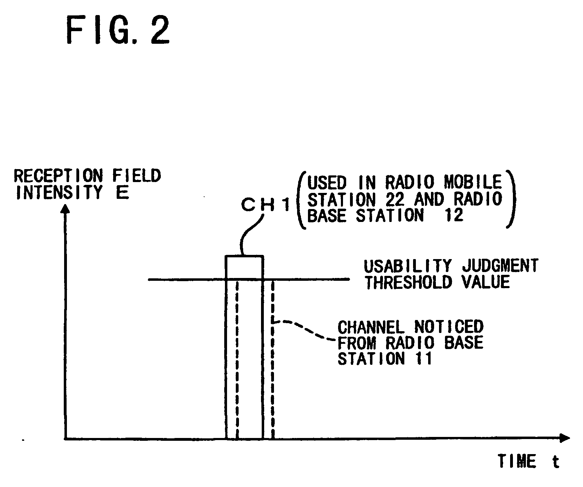

Fig. 2 shows the status of radio interference in the mobile radio station 21 under the conditions set forth above. Namely, the channel CH1 which is judged in the radio base station 11 as having no interference, is judged as having interference present and the reception level being in excess of the usability judgement threshold value.

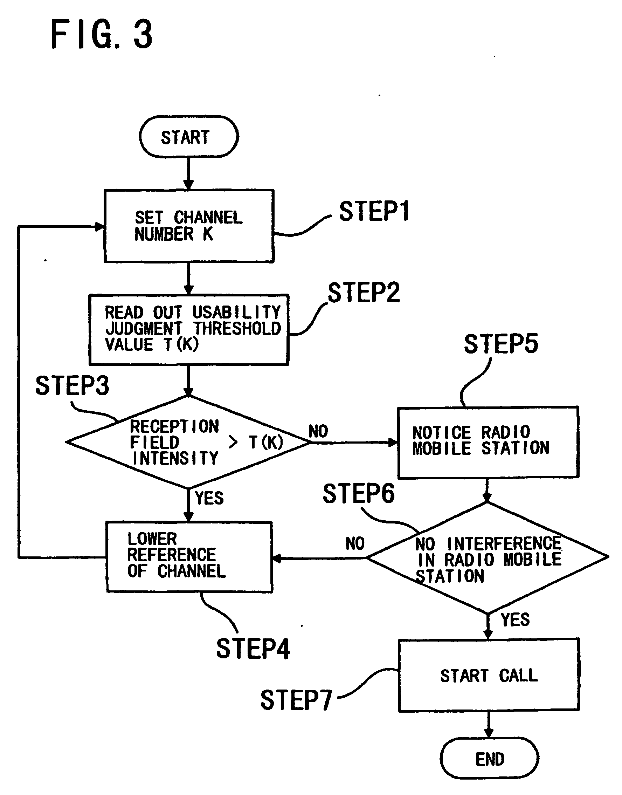

Hereinafter, the operating procedure for the particular communication channel assignment method will be described, as an example illustrative of the present invention, with reference to Fig. 3.

The radio base station gives preference to one channel from among the channels. When the radio base station needs to communicate with a mobile radio station, the channel number K of the highest preference is read out as a candidate (step 1). Then the reception field intensity is measured and the measured reception field intensity and the usability judgement threshold value T(K) are read out (step 2) for comparison in order to check whether interference is present or not (step 3). When the reception field intensity >T(K), the channel is judged as not being useful, and a process is carried out for lowering the preference of the channel which is selected as the candidate which is being interfered with (step 4). In this case, the difference between the reception field intensity and the usability judgement threshold value is derived in order to lower the preference of the channel in question to an extent corresponding to the difference. Thereafter, the channel to be used is retrieved again (step 1). On the other hand, when the reception field intensity <T(K), the channel is judged as being useful, and the channel selected is notified to the mobile radio station (step 5). On the side of the mobile radio station, the interference is again checked (step 6). In this case, when the presence of interference is judged as shown in Fig. 2, the difference between the received field intensity and the usability judgement threshold value is derived. Then, the mobile radio station transmits a request for the channel to be changed together with the difference thus derived. The radio base station is responsive to the notice from the mobile radio station to lower the preference of the channel in question to the extent corresponding to the difference noticed or observed from the radio mobile station for the possibility of causing interference (step 4). Then, the process is returned to step 1 to retrieve again the channel to be used.

By modifying the preference of the channel in the manner set forth above, the assignment of the channel can be carried out starting from the channel having the lesser record of causing interference. Then, communication is initiated with the channel which is judged as being useful in both the radio base station and the mobile radio station (step 7).

From the foregoing operation, of the particular mobile communication system described, as an example, in illustration of the present invention, it can be seen that as channels having high preference, channels having a lesser record in the occurrence of interference may be concentrated upon in order to enable spatial re-use of a channel between the radio base stations.

On the other hand, since the channel having the lesser possibility of causing interference can be notified to the mobile radio station, and the channel having the lesser possibility of causing interference is preferentially assigned both in the radio base station and the mobile radio station to reduce the number of times that the channel is retrieved up to the transition in establishing a call, whereby the period required in establishing a call connection may be shortened.

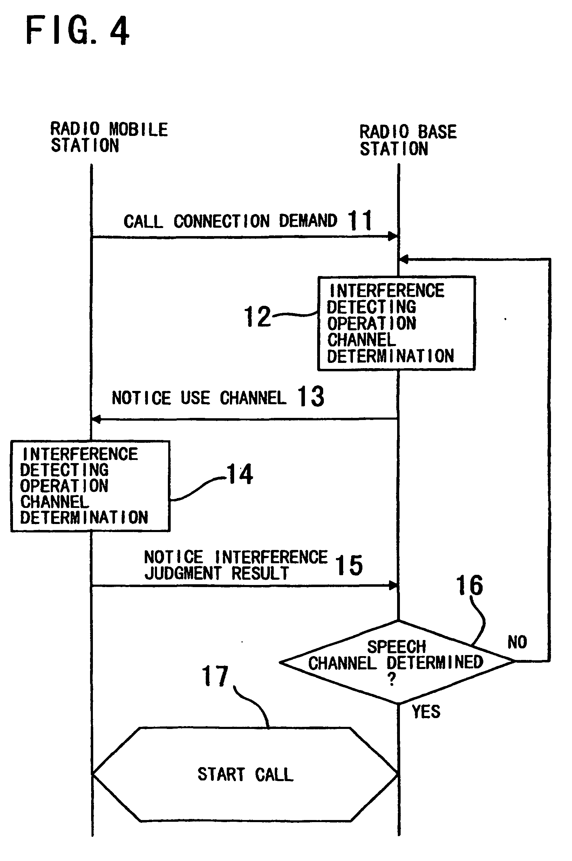

Next, a discussion will be made, with reference to Figs. 4 to 6, of a particular speech channel assignment system, illustrative of the present invention by way of example, in order to implement the foregoing method.

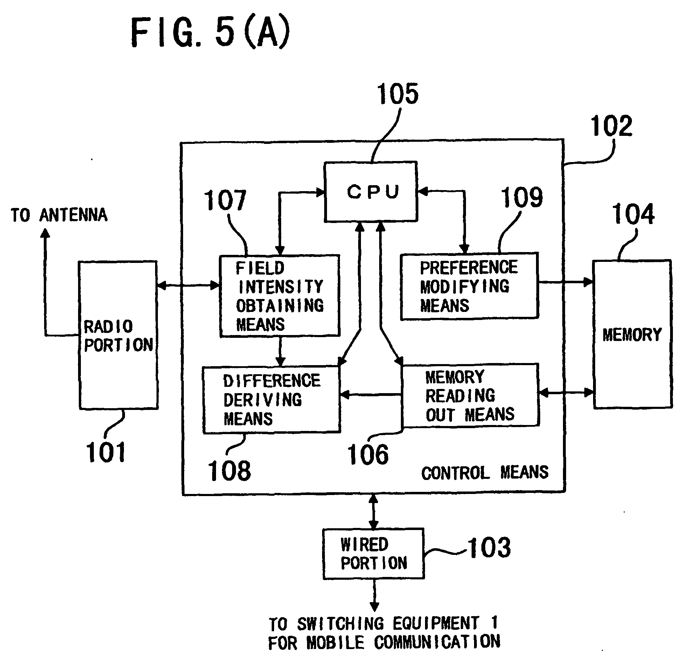

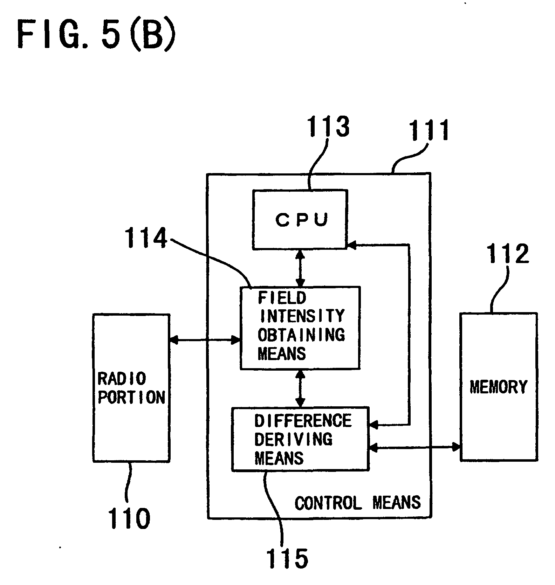

A system on the side of the radio base station shown in Fig. 5A has a radio portion 101, a control portion 102, a wired portion 103 and a memory 104. The radio portion 101 modulates and demodulates a signal from the control portion 102 and a signal from the mobile radio station to exchange signals with the mobile radio station. Also, the radio portion 101 measures the reception field intensity for a channel designated by the control portion 102 and reports the result of the measurement to the control portion 102. The wired portion 103 includes an interface with the switching equipment 1 for mobile communication, as shown in Fig. 1 for exchanging signals with the switching equipment 1 for mobile communication. The memory 104 has a table per channel number K to be used and it stores the preference and usability judgement threshold value per channel. The control portion 102 includes a CPU 105, memory reading out means 106 for reading out the preference and the usability judgement threshold value per channel stored in the memory 104, field intensity obtaining means 107 for obtaining the field intensity of the channel in question, as measured by the radio portion 101, and difference deriving means 108 for deriving the difference between the field intensity obtained and the usability judgement threshold value read out from the memory 104.

A system on the side of the radio mobile station shown in Fig. 5B has a radio portion 110, a control portion 111 and a memory 112. The radio portion 110 modulates and demodulates a signal from the control portion 111 and a signal from the radio base station to exchange signals with the radio base station. Also, the radio portion 110 measures the reception field intensity of the current channel to report to the control portion 111. The control portion 111 includes a CPU 113, field intensity obtaining means for obtaining the field intensity of the channel measured by the radio portion 101, difference deriving means 115 for deriving a difference between the field intensity obtained and a usability judgement threshold value read from the memory 112.

The operation of the speech channel assignment system will now be explained with reference to the flowchart of Fig. 3 and the chart of the exchange of the signals between the radio base station and the mobile radio station of Fig. 4.

When communication between the mobile radio station, and the radio base station becomes necessary, a call connection demand (11 of Fig. 4) is notified from the mobile radio station to the radio base station. In the radio base station, the control portion 102 receiving the demand demodulated by the radio portion 101 recognizes the necessity of establishing a call connection to read out the channel number K of the highest preference (step 1) and the usability judgement threshold valve T(K) (step 2) stored in the memory 104 in order to retrieve the channel to be used, by the memory reading out means 106. Then, the control portion 102 obtains the reception field intensity of the channel measured by the radio portion by the field intensity obtaining means 107 in order to check the condition of the interference of the read out channel K. The control portion 102 then compares the reception field intensity information of the channel from the radio portion 101 and the read-out usability judgement threshold value by the difference deriving means 108 to calculate the difference (step 3). When the reception field intensity is greater than the usability judgement threshold value, the channel is judged as not useful, and the control portion 102 lowers the preference of the channel by a preference modifying means 109 and re-writes the preceding preference stored in the memory 104 (step 4). Then, the channel having the highest preference is again read out (step 1) and the channel is assigned.

On the other hand, when the reception field intensity is smaller than the usability judgement threshold value, the channel is judged to be useful, and when the channel having no interference is found as a result of performing the foregoing process again, the control portion 102 notifies the channel number K thus selected to the radio portion 101 (12 of Fig. 4). The radio portion 101 modulates this signal to transmit it to the mobile radio station via a radio signal as the notice of the channel to be used (13 of Fig. 4) (step 5).

In the mobile radio station receiving the notice of the channel to be used, the reception field intensity of the channel is measured by the radio portion 110 in order to detect any interference with the channel. Then, the control portion 111 of the mobile radio station obtains the reception field intensity measured by the radio portion 110 of the field intensity obtaining means 114, and derives the difference between the obtained reception field intensity and the usability judgement threshold value read out from the memory 112 by the difference deriving means 115 (14 of Fig. 4). When the reception field intensity is smaller than the usability judgement threshold value, the channel is judged to be useful (step 6), and "the channel can be used" notice is sent to the radio base station by an interference judgement result notice (15 of Fig. 4). The usability judgement threshold value may be the same value, or different values, in the radio base station and the mobile radio station. On the other hand, when the reception field intensity is greater than the usability judgement threshold value, the channel is judged as not being useful, and the interference judgement result notice (15 of Fig. 4) indicative of "the channel is in interference" and the usability judgement threshold value are sent to the radio base station. The radio portion 101 of the radio base station receiving the foregoing notice demodulates the signal to notify it to the control portion 102. The control portion 102 carries out the steps for lowering the preference of the channel in question to the extent corresponding to the difference (step 4), to re-write the preceding preference of the memory 104 and to perform the retrieval of the channel to be used, again (step 1).

After determining the channel to be used at both the radio base station and the mobile radio station, the process moves to the establishment of a call connection (step 7 of Fig. 3, 16 of Fig. 4).

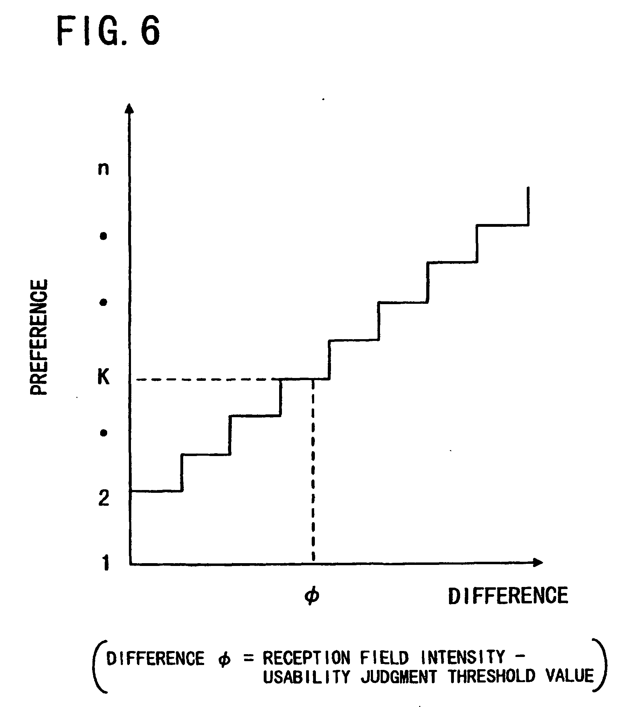

The foregoing method of the assignment of the preference of the channel will now be discussed with reference to Fig.6.

A management form of the preference of the channel in the memory 104 is shown in the following TABLE 1.

**TABLE 1**

| Preference | Use Channel |
|---|---|
| 1 | CH1 |
| 2 | CH2 |
| 3 | CH3 |
| . | . |
| . | . |
| . | . |
| n | CHn |

From the foregoing TABLE 1, it will be appreciated that each channel is managed according to the preference. When a call connection is demanded, the channel CH1 having the highest preference is read out. When interference is present on either the radio base station or the mobile radio station, a process for lowering the preference of the channel CH1 is carried out. The difference between the reception field intensity and the usability judgement threshold value is obtained by the control portion 102 to determine the preference of the channel CH1 after the lowering of the preference according to the difference/preference conversion table shown in Fig. 6.

In Fig. 6, the difference between the reception field intensity and the usability judgement threshold value is assumed to be φ and the reference at that time is k. Subsequently, the preferences of the channels presenting the preference k-1 to the memory 104 are up-shifted to write the channel CH1 with the preference k. The management table after the modification of the channel CH1 is shown in the following TABLE 2.

**TABLE 2**

| Preference | Use Channel |
|---|---|
| 1 | CH2 |
| 2 | CH3 |
| 3 | CH4 |
| . | . |
| . | . |
| . | . |
| k | CH1 |
| . | . |

By the process, the preference of the channel having a large amount of interference is lowered.

In the particular channel assigning method being described, the preference, employing the interference condition at the mobile radio station, is used to make a judgement as to whether the channel can be used or not by checking the presence of interference from the channel having the higher preference, so that the preference is assigned for the channels with weighting corresponding to the degree of interference. Therefore, as the channels of higher preference, the channels having a lesser record of the occurrence of interference are concentrated upon. Also, the channels having a larger record of the occurrence of interference are concentrated upon in the lower preferences. The system can be realized by a modification of the software used in order to limit the increase in the cost.

As set forth above, by assigning the channel on the basis of the preference determined in conjunction with the radio interference condition, the following effects can be achieved:-
(1) the channel having the lesser possibility of causing interference can be notified to the mobile radio station,
(2) since in both of the radio base station and the radio mobile station, the assignment of the channel is attempted from the channel having the lesser possibility of causing interference, the number of times that there is a retrieval of the channel before the transition to the establishment of call connection can be reduced, thereby shortening the period required for establishing a call connection,
(3) since the preference of the channel is determined in dependence upon the degree of interference, the channels in which it is difficult to cause interference and the channels in which interference is easily caused are discriminated from time to time. This enables the spatial re-use of the channel between the radio base stations,
(4) a preferred embodiment of the speech channel assigning system can be realized by merely modifying a part of the currently used software of the radio base station, and system cost can be minimised.

Although the present invention has been illustrated and described with respect to a particular arrangement, by way of example, it will be understood that variations and modifications thereof, as well as other arrangements may be conceived within the scope of the appended claims.

## Claims

1. A method for assigning a speech channel of a mobile communication system, in which each of a plurality of radio base stations having a plurality of channels in common assigns a speech channel to be used in an autonomous distributing manner, **characterized in that** it comprises:
a step executed by any of said radio base stations of setting a preference for assigning a speech channel;
a step (S 12) executed by the radio base station of calculating the difference between a field intensity of the assigned speech channel and a threshold value for the field intensity and modifying the preference of the speech channel by an amount corresponding to the difference.
a step (S 13) executed by the radio base station of issuing a notification of the speech channel to one of said mobile radio stations which tries to establish a call connection;
a step (S 14) executed by the mobile radio station of calculating the difference between a field intensity of the speech channel conveyed in the notification from the radio base station and a threshold value for the field intensity and issuing a notification of the difference to the radio base station;
a step (S 4) executed by the radio base station of modifying, based on the difference conveyed in the notification from the mobile radio station, the preference of the speech channel by an amount corresponding to the difference; and
a step executed by the radio base station of assigning a new speech channel based on the modified preference.

2. A mobile communication system which includes a plurality of radio base stations which have a plurality of speech channels in common and to which a speech channel to be used is individually assigned in an autonomous distributing manner and a plurality of mobile radio stations (21, 22) adapted for communication with any of said radio base stations using the speech channel, **characterized in that**
each of said mobile radio stations includes difference calculation means (115) for calculating the difference between a field intensity of the speech channel conveyed in a notification received from any of said radio base stations and a threshold value for the field intensity and notification means (111) for notifying the radio base station of the difference, and that
each of said radio base stations includes preference setting means (104) for setting a preference for assigning a speech channel, difference calculation means (108) for calculating the difference between a field intensity of the assigned speech channel and a threshold value for the field intensity, preference modification means (109) for modifying, based on the calculated difference and the difference conveyed in the notification received from any of said mobile radio stations, the preference of the speech channel by an amount corresponding to the differences, and speech channel assignment means (102) for assigning a new speech channel based on the modified preference.

## Patentansprüche

1. Verfahren zum Zuteilen eines Sprachkanals eines mobilen Kommunikationssystems, wobei jede von mehreren Funkbasisstationen mit mehreren gemeinsamen Kanälen in einer unabhängigen Verteilungsweise einen zu verwendenden Sprachkanal zuteilt, **dadurch gekennzeichnet, daß** es aufweist:
einen von einer beliebigen der Funkbasisstationen ausgeführten Schritt zum Festlegen einer Präferenz für die Zuweisung eines Sprachkanals;
einen von der Funkbasisstation ausgeführten Schritt (S 12) zum Berechnen der Differenz zwischen einer Feldstärke des zugeteilten Sprachkanals und einem Schwellwert für die Feldstärke und zum Ändern der Präferenz für den Sprachkanal um den der Differenz entsprechenden Betrag;
einen von der Funkbasisstation durchgeführten Schritt (S 13) zum Ausgeben einer Benachrichtigung über den Sprachkanal an eine der Mobilfunkstationen, die versucht, eine Rufverbindung aufzubauen;
einen von der Mobilfunkstation ausgeführten Schritt (S 14) zum Berechnen der Differenz zwischen einer Feldstärke des Sprachkanals, der in der Benachrichtigung von der Funkbasisstation übermittelt wird, und einem Schwellwert für die Feldstärke und Ausgeben einer Benachrichtigung über die Differenz an die Funkbasisstation;
einen von der Funkbasisstation ausgeführten Schritt (S 4) zum Ändern der Präferenz für den Sprachkanal um einen der Differenz entsprechenden Betrag auf der Grundlage der in der Benachrichtigung von der Mobilfunkstation übermittelten Differenz; und
einen von der Funkbasisstation ausgeführten Schritt zum Zuteilen eines neuen Sprachkanals auf der Grundlage der geänderten Präferenz.

2. Mobiles Kommunikationssystem, das umfaßt: mehrere Funkbasisstationen mit mehreren gemeinsamen Sprachkanälen, denen in einer unabhängigen Verteilungsweise ein zu verwendender Sprachkanal zugeteilt wird, und mehrere Mobilfunkstationen (21, 22), die für die Kommunikation mit jeder der Funkbasisstationen unter Verwendung des Sprachkanals geeignet sind, **dadurch gekennzeichnet, daß**
jede der Mobilfunkstationen eine Differenzberechnungseinrichtung (115) zum Berechnen der Differenz zwischen einer Feldstärke des Sprachkanals, der in einer von jeder der Basisstationen empfangenen Benachrichtigung übermittelt wird, und einem Schwellwert für die Feldstärke und eine Benachrichtigungseinrichtung (111) zum Benachrichtigen der Funkbasisstation über die Differenz umfaßt, und daß
jede der Funkbasisstationen umfaßt: eine Präferenzeinstellungseinrichtung (104) zum Einstellen einer Präferenz für das Zuteilen eines Sprachkanals, eine Differenzberechnungseinrichtung (108) zum Berechnen der Differenz zwischen einer Feldstärke des zugeteilten Sprachkanals und einem Schwellwert für die Feldstärke, eine Präferenzänderungseinrichtung (109) zum Ändern der Präferenz des Sprachkanals um einen den Differenzen entsprechenden Betrag auf der Grundlage der berechneten Differenz und der in der von jeder Mobilfunkstation empfangenen Benachrichtigung übermittelten Differenz und eine Sprachkanal-Zuteilungseinrichtung (102) zum Zuteilen eines neuen Sprachkanals auf der Grundlage der geänderten Präferenz.

## Revendications

1. Procédé pour attribuer un canal de parole d'un système de communication mobile, dans lequel chacune d'une pluralité de stations de base radio ayant une pluralité de canaux en commun attribue un canal de parole devant être utilisé selon une répartition autonome, **caractérisé en ce qu'**il comprend :
une étape exécutée par l'une quelconque desdites stations de base radio consistant à établir une préférence pour attribuer un canal de parole ;
une étape (S 12) exécutée par la station de base radio consistant à calculer la différence entre une intensité de champ du canal de parole attribué et une valeur de seuil pour l'intensité de champ et modifier la préférence du canal de parole par une quantité correspondant à la différence ;
une étape (S 13) exécutée par la station de base radio consistant à émettre une notification du canal de parole à une desdites stations radio mobiles qui essaie d'établir une connexion d'appel ;
une étape (S 14) exécutée par la station radio mobile consistant à calculer la différence entre une intensité de champ du canal de parole acheminée dans la notification depuis la station de base radio et une valeur de seuil pour l'intensité de champ et émettre une notification de la différence à la station de base radio ;
une étape (S 4) exécutée par la station de base radio consistant à modifier, sur la base de la différence acheminée dans la notification depuis la station radio mobile, la préférence du canal de parole par une quantité correspondant à la différence ; et
une étape exécutée par la station de base radio consistant à attribuer un nouveau canal de parole sur la base de la préférence modifiée.

2. Système de communication mobile qui comprend une pluralité de stations de base radio qui ont une pluralité de canaux de parole en commun et auxquelles un canal de parole devant être utilisé est attribué individuellement selon une répartition autonome et une pluralité de stations radio mobiles (21, 22) adaptées pour la communication avec l'une quelconque desdites stations de base radio utilisant le canal de parole, **caractérisé en ce que** :
chacune desdites stations radio mobiles comprend un moyen de calcul de différence (115) pour calculer la différence entre une intensité de champ du canal de parole acheminé dans une notification reçue de l'une quelconque desdites stations de base radio et une valeur de seuil pour l'intensité de champ et un moyen de notification (111) pour notifier à la station de base radio la différence, et **en ce que**
chacune desdites stations de base radio comprend un moyen d'établissement de préférence (104) pour établir une préférence pour attribuer un canal de parole, un moyen de calcul de différence (108) pour calculer la différence entre une intensité de champ du canal de parole attribué et une valeur de seuil pour l'intensité de champ, un moyen de modification de préférence (109) pour modifier, sur la base de la différence calculée et de la différence acheminée dans la notification reçue de l'une quelconque desdites stations radio mobiles, la préférence du canal de parole par une quantité correspondant aux différences, et un moyen d'attribution de canal de parole (102) pour attribuer un nouveau canal de parole sur la base de la préférence modifiée.
